# EUROPEAN PATENT SPECIFICATION

(11) **EP 3 578 053 B1**
(45) Date of publication and mention of the grant of the patent: **02.09.2020**
(21) Application number: 18175668.5
(22) Date of filing: 04.06.2018
(51) Int. Cl.: A23J 3/14, A21D 2/26, A21D 2/36

(54) **METHOD FOR MANUFACTURING A FOOD PRODUCT**
VERFAHREN ZUR HERSTELLUNG EINES LEBENSMITTELS
MÉTHODE DE PRODUCTION D'UN PRODUIT ALIMENTAIRE.

(43) Date of publication of application: 11.12.2019
(73) Proprietor: Verso Food Oy, 02150 Espoo (FI)
(72) Inventor: Saarinen, Leena, 00210 Helsinki (FI); Laukkala, Elli, 60100 Seinäjoki (FI)
(74) Representative: Aaltonen, Janne Lari Antero

(56) References cited:
- WO-A1-2015/158959
- CA-A- 1 108 006
- FR-A1- 2 287 177
- GB-A- 2 543 623
- US-A1- 2011 311 599

## Description

### FIELD OF THE INVENTION

The present invention relates to a method for manufacturing a food product, comprising mixing dry ingredients, adding water, kneading the obtained hydrated mixture in an extruder and obtaining the food product through a cooling die of the extruder.

### BACKGROUND AND OBJECTS OF THE INVENTION

Vegetarian food is the object of increasing interest among the population, due to ecological, ethical and health reasons. Indeed, the amount of people who regularly eat vegetarian food is increasing, i.e. more and more people regularly (for example once or twice a week) replace meat, poultry or fish with vegetable-based food. Vegetarian cooking is however sometimes considered cumbersome, and it may be deemed difficult to ascertain that a sufficient amount of proteins and other nutrients are obtained when the consumption of meat and fish is reduced. Furthermore, it has been observed that it is easier for many people to eat vegetarian food or to eat it more often, if the vegetarian food product resembles a known meat product (for example resembles minced meat).

There is thus a need to provide an easy-to-use food product that has a significant protein content. In order to make it even easier for people to adopt regular vegetarian meals into their habits, it may be desirable to provide a food product which "mouth-feel and bite" is close to that of meat. For example, a food product that feels like cooked chicken may be more attractive to certain people. Such products are sometimes called high moisture meat analogues (HMMA), texturised vegetable protein (TVP) or wet texturised protein (WTP).

Document EP 2706867 discloses a method of making a soy product that has a meat-like structure. This structure is obtained by a specific method comprising kneading an aqueous soy protein composition, subjecting it to heat, shear forces and pressure, and extrude the composition through a die in such a manner that at the outlet of the die, the temperature of the composition is above the boiling temperature of water. In this manner, the water evaporates and creates a porous structure imitating the structure of meat. FR 2287 177 describes an extrusion process for producing textured vegetable protein based on a premix of 70-90 wt.% bean flour, which contains 50-70 wt.% of vegetable protein, together with 10-30 wt.% of biologically-assimilable powdered binder, 15-40 wt.% of water forming a paste which is heated to 200-300 °C.

It is an object of the present invention to provide a method for manufacturing a food product having a structure close to cooked meat, especially that of cooked chicken. It is especially an object to provide a method that leads to a fibrous food product. It is also an object to provide a method for manufacturing a food product that can be easily processed further.

### BRIEF DESCRIPTION OF THE DRAWING

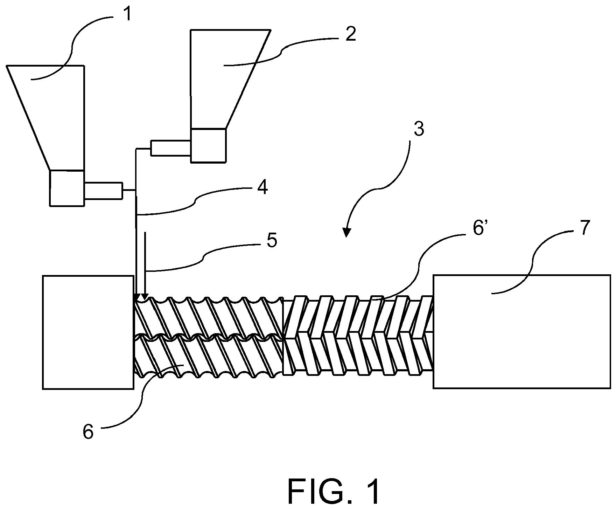

Fig. 1 schematically illustrates a machine usable in the present method.

### DETAILED DESCRIPTION OF THE INVENTION

The present invention relates to a method for manufacturing a food product. A typical method comprises the following steps:
- mixing dehulled fava bean flour and vegetable protein flour to obtain a basic mixture, wherein the basic mixture comprises 15-30 wt-% of dehulled fava bean flour and 70-85 wt-% of vegetable protein flour;
- adding water to the basic mixture in an amount of 30-70 wt-% of the total weight of the basic mixture and water to obtain a hydrated mixture;
- kneading the hydrated mixture at a temperature of 100-150 °C in an extruder, to form a dough; and
- allowing the dough to exit the extruder via a cooling die to form the food product, wherein the temperature of the food product at the exit of the cooling die is 50-95 °C.

The percentages used in the present description are weight percentages (abbreviated wt-%). In the case of the basic mixture, the wt-% is with respect to the total weight of the dry basic mixture. In the case of the protein content of the dehulled fava bean flour, the wt-% is with respect to the dry dehulled fava bean flour alone, not the weight of the basic mixture. By dry it is meant that the flour or mixture contains the amount of water that it contains naturally, i.e. that is adsorbed within it in normal atmospheric conditions (normal pressure, temperature and humidity), i.e. it may contain small amount of water that could be removed only by drying in increased temperature.

The present method uses dehulled fava bean flour. It has been observed that the dehulled fava bean flour gives the final product good fibrous structure, when compared to a product comprising non-dehulled fava bean flour. It has also been observed, that the flavour profile of a food product comprising dehulled fava bean flour is more advantageous than that of a food product not comprising fava bean. The fava bean flour is dehulled, as it has also been observed that the fibres of the hull has a negative impact on the structure, i.e. although the hull comprises fibres, it does not give the final product the desired, meat-like fibrous structure. Dehulling thus has a positive effect on the food product. In addition to the effect on the fibrous structure, the hulls have a brownish colour, while the core of the bean is of a lighter colour, thus the use of dehulled fava beans allows the obtention of a lighter food product. Moreover, the hulls typically have a slightly bitter taste, which has a negative effect on the food product. Still further, the protein content of the dehulled fava bean flour is slightly higher than that of fava bean flour comprising the hulls (28.3 vs. 25.8 g/100 g of product). Furthermore, the particle size of dehulled fava bean flour is smaller and the particle size distribution of dehulled fava bean flour is more uniform compared to those of fava bean flour comprising the hulls. All of these features have an impact on the manufacturing of the food product as well as the mouth-feel, taste profile, colour and bite of the food product.

Fava bean (*vicia faba*), also known as the broad bean, faba bean, field bean, bell bean or tic bean, is a species of bean (*Fabaceae*) native to North Africa, Southwest and South Asia, and extensively cultivated also elsewhere. In 100 g of fava bean (including hulls) there may be about 25 g of fibers, about 10 g of water, less than 2 g of fat and about 31 g of protein. In addition, the fava beans may contain the following vitamins and nutrients (with % of daily intake recommended for adults, source: USDA nutrient database):

| | |
|---|---|
| Thiamine (vitamin B1) | 0.555 mg (48 %) |
| Riboflavin (vitamin B2) | 0.333 mg (28 %) |
| Niacin (vitamin B3) | 2.832 mg (19 %) |
| Vitamin B6 | 0.366 mg (28 %) |
| Folate (vitamin B9) | 423 µg (106 %) |
| Vitamin C | 4 mg (2 %) |
| Vitamin K | 9 µg (9 %) |
| Calcium | 103 mg (10 %) |
| Iron | 6.7 mg (52 %) |
| Magnesium | 192 mg (54 %) |
| Manganese | 1.626 mg (77 %) |
| Phosphorus | 421 mg (60 %) |
| Potassium | 1062 mg (23 %) |
| Sodium | 13 mg (1 %) |
| Zinc | 3.14 mg (33 %) |

The fava beans are harvested when they are ripe, and the pods are firstly removed. They may even be removed at the field and returned to the field as nutrients. The moisture (water) content of the ripe fava beans is typically below 14 wt-%. Thereafter, the beans are cleaned (if necessary) and dehulled by known methods, for example by using a dehulling machine, or by grinding the beans using a hammermill or a roller mill, whereafter the resulting mixture is passed on a sieve to remove the hulls. The dehulled fava beans are then turned into fava bean flour, using known methods and equipment, for example by grinding whole dried beans in a hammermill, or by further grinding the cleaned ground beans.

Fava beans have traditionally been used mainly as fodder, and its use for human consumption has been very limited. This is partly due to the fact that the taste and colour of the fava beans are limiting their use, due to the taste and the visual look of the products. Furthermore, as it contains a significant amount of starch, protein and fibres, it is not an easy replacement of other ingredients in the food manufacturing processes. For example, starch is typically subject to gelation when put in contact with hot water, thus starch only adsorbs a limited amount of water.

It is however an object to make a product that contains as much fava bean flour as possible while keeping the total amount of protein within suitable limits (preferably 20-30 wt-%), and this object has been obtained by the present process. Preferably, the food product is free from soy and/or glutens, i.e. the raw materials do not comprise soy and/or any ingredient comprising gluten. According to another preferred embodiment, the raw materials do not include any oils, with the exception of minor (i.e. below 0.5 wt-%) amounts of oils containing fragrances or spices etc.

According to an embodiment, the protein content of the dehulled fava bean flour is 25-45 g/100 g. The protein content of the dehulled fava bean flour can be from 25, 28, 30, 32, 35, 37, 40 or 42 up to 28, 30, 32, 35, 37, 40, 42 or 45 g/100 g.

The food product also comprises vegetable protein flour. The vegetable protein flour is a flour mainly consisting of proteins, i.e. typically an extract or isolate consisting of protein. Preferably, the vegetable protein flour is different from fava bean protein four, i.e. the vegetable protein flour is from another vegetable than fava bean. The protein content is such protein flours is typically at least 60 wt-%, preferably at least 80 wt-%. The vegetable protein flour is added to increase the protein content of the final food product. It has also been observed that it has an impact on the formation of the fibrous structure. It is indeed desired that the protein content of the final food product be above 20 wt-%. According to an embodiment, the vegetable protein is selected from a group consisting of pulse proteins, nut proteins, cereal proteins, seed proteins and potato protein. By pulse, it is meant the edible seed of a leguminous plant, belonging to the family Fabaceae (or Leguminosae). Some examples of legumes include alfalfa, clover, peas, beans, lentils, lupins, mesquite, carob, soy and peanuts. The vegetable protein may be for example one or more of the following: pea protein, wheat protein, soy protein, bean protein, lentil protein, hempseed protein, spirulina protein, chia seed protein, sunflower protein, potato protein, oat protein, nut protein. Some further examples of vegetables are kidney bean, navy bean, pinto bean, haricot bean (*Phaseolus vulgaris*); lima bean, butter bean (*Phaseolus lunatus*); adzuki bean, azuki bean (*Vigna angularis*); mung bean, golden gram, green gram (*Vigna radiata*); black gram, urad (*Vigna mungo*); scarlet runner bean (*Phaseolus coccineus*); rice bean (*Vigna umbellata*); moth bean (*Vigna aconitifolia*); tepary bean (*Phaseolus acutifolius*); peas (*Pisum spp*.) such as garden pea (*Pisum sativum* var. *sativum*) and protein pea (*Pisum sativum* var. *arvense*); chickpea, garbanzo, bengal gram (*Cicer arietinum*); dry cowpea, black-eyed pea, blackeye bean (*Vigna unguiculata*); pigeon pea, arhar/toor, cajan pea, congo bean, gandules (*Cajanus cajan*); lentil (*Lens culinaris*); bambara groundnut, earth pea (*Vigna subterranea*); vetch, common vetch (*Vicia sativa*); lupins (*Lupinus spp*.); lablab, hyacinth bean (*Lablab purpureus*); jack bean (*Canavalia ensiformis*), sword bean (*Canavalia gladiata*); winged bean (*Psophocarpus tetragonolobus*); velvet bean, cowitch (*Mucuna pruriens var. utilis*); yam bean (*Pachyrhizus erosus*).

The vegetable protein flour may comprise only one type of protein (i.e. from one source) or it may contain two, three, four, five or more types of proteins (i.e. from several difference sources). In case of several different proteins, they are preferably mixed together before addition to the dehulled fava bean flour.

The dehulled fava bean flour and vegetable protein flour are mixed to obtain a basic mixture. The basic mixture comprises 15-30 wt-% of dehulled fava bean flour and 70-85 wt-% of vegetable protein flour. The weight percentages are from the total weight of the basic mixture.

According to an embodiment, the basic mixture comprises 20-30 wt-% of dehulled fava bean flour. The basic mixture may thus comprise from 15, 18, 20, 22, 25 or 28 wt-% up to 18, 20, 22, 25, 28 or 30 wt-% of dehulled fava bean flour. According to another embodiment, the basic mixture comprises 70-80 wt-% of vegetable protein flour. The amount of vegetable protein flour can be from 70, 72, 75, 78, 80 or 82 wt-% up to 72, 75, 78, 80, 82 or 85 wt-%.

The dehulled fava bean flour and/or the vegetable protein flour may also be used in another form than in powder form, although powder form is believed to be the preferred form. They may for example be used in the form of a solution comprising water (which solution may have different viscosities). In such a case, the amounts of the various flours and water are calculated based on the dry weight of the flour.

Water is added to the basic mixture in an amount of 30-70 wt-% of the total weight of the basic mixture and water to obtain a hydrated mixture. According to an embodiment, the amount of water in the hydrated mixture is 45-60 wt-%. The amount of water in the hydrated mixture may thus be from 30, 32, 35, 37, 40, 42, 45, 48, 50, 52, 55, 58, 60, 62 or 65 wt-% up to 32, 35, 37, 40, 42, 45, 48, 50, 52, 55, 58, 60, 62, 65, 68 or 70 wt-%.

Water may be added to the basic mixture before the introduction of the resulting hydrated mixture to the extruder, or the addition of water may be carried out in the extruder (i.e. the basic mixture or its ingredients and water are introduced separately to the extruder). An amount of water may also be added to the dry ingredients in a pre-conditioner, for example in the form of steam.

One suitable composition of the hydrated mixture is 12 wt-% of the dehulled fava bean flour, 36 wt-% of pea protein isolate and 52 wt-% of water. The wt-% are of the hydrated mixture, i.e. the amount of the basic mixture is 48 wt-%, and thus the amount of dehulled fava bean flour is 25 wt-% of the basic mixture and the amount of pea protein isolate is 75 wt-% of the basic mixture.

The method also comprises kneading the hydrated mixture at a temperature of 100-150 °C in an extruder to form a dough. The extruder may be any suitable extruder, such as a single screw extruder or a twin screw extruder, a twin screw extruder being preferred. Preferably, the extruder screws comprise various parts that have differing screw structure, to allow the hydrated mixture to be effectively formed into a dough. The parts may comprise parts that only convey the material forward (conveying parts), part that mix (mixing parts), other that knead (kneading parts), some may even force the mixture to go backwards (left-handed parts, which create pressure by forcing the material to go backwards). Moreover, the temperature within the various parts of the extruder may vary. A typical length of the extruder may be from 1.5 to 3 meters, such as about 2 meters. The rotation speed of the screw(s) may also vary on the length of the extruder. Typically, also the pressure inside the extruder is higher than the normal atmospheric pressure. It may be achieved either by separate input (increasing pressure) or it may be created by the functioning of the extruder and kneading of the hydrated mixture. Likewise, the temperature may be achieved by heating the extruder or it may be caused by the functioning of the extruder itself. Moreover, the mechanically induced movement of the extruded product also creates heat. The temperature may be from 100, 105, 110, 115, 120, 125, 130, 135 or 140 °C up to 105, 110, 115, 120, 125, 130, 135, 140, 145 or 150 °C.

At the end of the extruder, the dough is allowed to exit the extruder via a cooling die to form the food product. The temperature of the food product at the exit of the cooling die is 50-95 °C. In any case, the temperature is below the boiling temperature of water in the environment at the exit of the cooling die. The temperature may be for example 60-85 °C, or it may be from 50, 52, 55, 58, 60, 63, 65, 67, 70, 72, 75, 78, 80, 83, 85, 87, 90 or 92 °C up to 52, 55, 58, 60, 63, 65, 67, 70, 72, 75, 78, 80, 83, 85, 87, 90, 92 or 95 °C. Indeed, it has been observed that if the temperature of the food product at the exit of the cooling die is not low enough (i.e. below 100 °C), the product does not have the desired texture and structure, and the resulting product was not stable enough for later handling.

It is believed that the during the kneading in the extruder, some double bonds open, leading to cross-linking during the passage in the die. The die is believed, in addition to the cooling, to induce a laminar flow to the resulting mixture. This leads to the fibrous, meat-like structure of the food product.

The die may have any suitable form and length. Typically, it is a cooling die, i.e. it is cooled for example by a circulation of a cooling liquid (such as water or glycol). Its length and cooling are designed such that they are sufficient to obtain the desired temperature of the food product at the end of the die. Indeed, it has been observed on one hand that if the temperature of the food product is at or above 100 °C, the product does not have a sufficient consistency but rather it is too runny for any further processing and thus does also not have the desired fibrous structure. Furthermore, when the temperature is below 100 °C, the obtained food product has the desired fibrous structure. On the other hand, it has been observed that if the temperature is below 50 °C, the process is too slow and the food product does not exit the extruder in a suitable time.

The cooling die may be for example in the form of a tube having an outer diameter of 30-40 cm, and an inner diameter that is smaller than the outer diameter by double of the thickness of the food product (such as 28-38 cm). The tube is preferably equipped with a cooling arrangement on both the outer surface and the inner surface of the die. The cooling die may also be a wide yet small slit having an opening approximately equal to the thickness of the food product. The length of the cooling die may be for example 1-3 meters, such as about 1.5 meters. The cooling die preferably has such a structure that the temperature gradient within the thickness of the finished food product is at most 10 °C, i.e. that the difference in temperature between the surface of the food product and the warmest spot within the thickness of the food product is at most 10 °C, preferably at most 5 °C.

According to an embodiment, the food product at the exit of the cooling die has a thickness of 2-30 mm. Indeed, it is preferred that the food product exits the cooling die in a rather thin format, so that the temperature of the food product is as uniform as possible, throughout the thickness of the food product. The thickness can be for example from 2, 3, 4, 5, 6, 7, 8, 9, 10, 12, 15, 17, 20, 23, 25 or 28 mm up to 3, 4, 5, 6, 7, 8, 9, 10, 12, 15, 17, 20, 23, 25, 28 or 30 mm. One suitable range of thickness is 9-15 mm, such as 10-12 mm.

According to an embodiment, the dehulled fava bean flour comprises at most 10 wt-% of hulls. Indeed, it is almost impossible to obtain a dehulled fava bean flour that would not comprise any remains of the hulls. It is of course preferred to have as little as possible of the remains of the hulls, such as at most 2, 5 or 7 wt-% (of the weight of the dehulled fava bean flour).

The particle size of the dehulled fava bean flour is below 1000 µm, as measured by laser scattering. By particle size it is here meant that at least 90 wt-%, preferably at least 95 wt-% of the particles have a size within the given range. According to an embodiment, the particle size of the dehulled fava bean flour is 125-800 µm. The particle size may thus vary from 50, 100, 150, 200, 250, 300, 350, 400, 450, 500, 550, 600, 650 or 700 µm up to 100, 150, 200, 250, 300, 350, 400, 450, 500, 550, 600, 650, 700, 750, 800, 850, 900, 950 or 1000 µm.

According to another embodiment, the food product further comprises at most 15 wt-% of at least one component selected from a group consisting of spices, herbs, colours, extracts, vitamins and flavours. The spices may comprise for example salt and/or pepper. These ingredients are thus designed to give flavour and/or colour to the food product. The flavour can be for example that of chicken or other meat. The ingredients may be in dry, powder form or in liquid form. Their addition to the process is described below. The amount of such additional ingredients may be from 0, 0.2, 0.5, 0.8, 1, 1.2, 1.5, 1.8, 2, 2.3, 2.5, 2.7, 3, 3.3, 3.5, 3.7, 4, 4.2 4.5, 5, 5.5, 6, 6.5, 7, 7.5, 8, 8.5, 9, 9.5, 10, 10.5, 11, 11.5, 12, 12.5 or 13 wt-% up to 0.2, 0.5, 0.8, 1, 1.2, 1.5, 1.8, 2, 2.3, 2.5, 2.7, 3, 3.3, 3.5, 3.7, 4, 4.2, 4.5, 4.8 5, 5.5, 6, 6.5, 7, 7.5, 8, 8.5, 9, 9.5, 10, 10.5, 11, 11.5, 12, 12.5, 13, 13.5, 14, 14.5 or 15 wt-%, based on the total weight of the food product.

According to an embodiment, the mixing of de-hulled fava bean flour and vegetable protein flour and the adding of water to the basic mixture is carried out in the extruder. The dry matters of the basic mixture may also be mixed together separately and fed to the extruder as a ready basic mixture. It is also possible to add water to the basic mixture outside the extruder, although it is deemed preferred to mix water into the basic mixture within the extruder. If additional ingredients, such as spices, herbs, flavours, colours and/or extracts are used, they may be added to the dehulled fava bean flour, to the vegetable protein flour, to the basic mixture or to the extruder. In case they are in liquid form, they may also be added to water before the resulting mixture is introduced to the extruder.

After production, the obtained food product can be treated in any suitable manner. It is typically firstly allowed to cool to ambient temperature or to a temperature of about 50-60 °C. This cooling process may also be accelerated by using suitable cooling equipment. At this stage, it is also possible to add flavours and/or spices etc. These are added on the surface of the food product, preferably in powder form.

After (or before) cooling, the food product may be cut into suitable size, using a knife arrangement, cutters etc. It may also be shred, in order to lead to a product that has the consistence and structure of pieces of chicken meat. Thereafter, the food product is typically packed. One advantageous way is to pack is under vacuum. Indeed, such vacuum packing itself increases the shelf life of the product and additionally, the vacuum-packed product may be subjected to pasteurising and/or sterilising (later called treatment) to further increase its shelf-life. A product treated in such a manner may also be suitable for transportation and storage in ambient temperatures, i.e. it does not require refrigeration. This leads to significant costs for the transport and storage, while also making the product more environmentally friendly. The treatment is carried out in a manner known in the art. Indeed, the product is typically subjected to a cycle of varying temperatures (first increasing the temperature, then decreasing it, repeatedly), leading to a wakening up of certain type of bacteria during a first increase of temperature, whereafter the following increase of temperature destroys the bacteria. In addition to increased temperature, the product may be subjected to increased pressure, to further enhance the effect of the treatment. For example, the vacuum-packed food product may be subjected to a temperature above 105 °C for a period of time of at least 3 minutes

In one embodiment, the maximum temperature is 115 °C, the pressure is 1.5 bar and the duration of the treatment is 20 minutes. The treatment is typically followed by a controlled cooling of the product. It has been observed that this treatment, in addition for increasing the shelf life of the product, also affects the consistency of the product slightly, making it somewhat firmer. In one example, the temperature is firstly increased from 18 to about 113 °C in about 10 minutes, in a regular manner. Thereafter, the temperature is kept at about 113-115 °C for about 25 minutes and then decreased down to about 3 °C during a period of 1.5 hours.

Indeed, the temperature of the treatment may be from 105, 110, 115 or 120 °C up to 110, 115, 120 or 125 °C. The pressure possibly used in the treatment may be from 1.1, 1.2, 1.3, 1.4, 1.5, 1.6, 1.7 or 1.8 bar up to 1.2, 1.3, 1.4, 1.5, 1.6, 1.7, 1.8, 1.9 or 2 bar. The duration of the treatment may be from 3, 4, 5, 6, 7, 8, 9, 10, 11, 12, 13, 14, 15, 16, 17, 18, 19, 20, 21, 22, 23, 24, 25 or 26 minutes up to 4, 5, 6, 7, 8, 9, 10, 11, 12, 13, 14, 15, 16, 17, 18, 19, 20, 21, 22, 23, 24, 25, 26, 27, 28 or 30 minutes.

The food product may also be stored in a refrigerator or in a deep freezer, either after vacuum packing or without vacuum packing. Furthermore, it is possible to subject the food product to the above-mentioned treatment (pasteurisation and/or sterilisation) before cutting or shredding the food product. Similarly, it is possible to add the various flavours and spices either into the raw materials (i.e. before the extruder) or to the food product at the exit of the extruder, or after treatment or cutting/shredding of the food product.

### DETAILED DESCRIPTION OF THE DRAWING

Figure 1 schematically illustrates a machine usable in the present method. The machine comprises two hoppers, a first hopper 1 for the dehulled fava bean flour and a second hopper 2 for the vegetable protein flour. These two hoppers are connected to the extruder 3 via a common feeding line 4. Water is fed to the extruder 3 via a feeding line 5. The extruder 3 is shown very schematically, and the two screws 6 and 6' are illustrated without their cover, in order to show how the screws comprise different parts with differing structure. A cooling die 7 is arranged at the end of the screws 6, 6'.

### EXPERIMENTAL PART

Various experiments were carried out with the aim to obtain suitable process conditions and amounts of raw materials. Some experiments are listed below in Table 1. The amounts of ingredients are given as weight-% of the total amount (dry matter and water).

In the experiments, the dry matters were mixed together before introducing them to the extruder. Each test was started with a low amount of water, but it was observed that the desired structure requires a certain minimum amount of water. On the other hand, it was also observed that increasing the amount of dehulled fava bean flour leads to a better structure, while also limiting the amount of water (from 60 to 52 wt-%) improves the structure of the final product.

**Table 1**

| Dehulled fava bean flour (wt-%) | Pea protein isolate (wt-%) | Water (wt-%) | Results and observations |
|---|---|---|---|
| 20 | 20 | 60 | The structure is too soft, no fibrous structure. Thus, trial with only pea protein isolate to see its effect on the structure. |
| 0 | 40 | 60 | The structure is rubber-like, while an intermediate of these two is aimed at, while keeping amount of fava bean as high as possible. |
| 12 | 36 | 52 | The structure that is aimed for. |

Furthermore, the obtained product with the structure that was aimed at was packed into vacuum and tested for its mouth feel and scent the following day. This test indicated that if the temperature of the product at the exit of the cooling die had been about 55 °C, the structure of the product was the firmest and it had a light scent. If the temperature of the product at the exit of the cooling die had been about 70 °C, the structure was softer and the product had a similar scent. If the temperature of the product at the exit of the cooling die had been about 90 °C, the structure was the softest and the product had the strongest scent.

The effect of the temperature of the product at the exit of the cooling die on the structure was also tested. The pressure at the exit of the cooling die was the normal atmospheric pressure. It was found that if the temperature was above 100 °C, the product was too soft and had no firm and fibrous structure. If the temperature was below 100 °C, fibrous structure was obtained, with the temperature of 60-75 °C being ideal for the tested amounts of raw materials (as in Table 1). The temperature of 50 °C was found to be the lower limit for the product to exit the cooling die at all. In this experiment, the temperatures at the extruder were 63 °C, 106 °C and 122 °C at consecutive points of the extruder, while the pressure was 23 bars.

## Claims

1. A method for manufacturing a food product, comprising
- mixing dehulled fava bean flour and vegetable protein flour to obtain a basic mixture, wherein the basic mixture comprises 15-30 wt-% of dehulled fava bean flour and 70-85 wt-% of vegetable protein flour;
- adding water to the basic mixture in an amount of 30-70 wt-% of the total weight of the basic mixture and water to obtain a hydrated mixture;
- kneading the hydrated mixture at a temperature of 100-150 °C in an extruder, to form a dough; and
- allowing the dough to exit the extruder via a cooling die to form the food product, wherein the temperature of the food product at the exit of the cooling die is 50-95 °C.

2. A method according to claim 1, wherein the vegetable protein is selected from a group consisting of pulse proteins, nut proteins, cereal proteins, seed proteins and potato protein.

3. A method according to any one of the preceding claims, wherein the protein content of the dehulled fava bean flour is 25-45 g/100 g.

4. A method according to any one of the preceding claims, wherein the basic mixture comprises 20-30 wt-% of dehulled fava bean flour.

5. A method according to any one of the preceding claims, wherein the basic mixture comprises 70-80 wt-% of vegetable protein flour.

6. A method according to any one of the preceding claims, wherein the amount of water in the hydrated mixture is 45-60 wt-%.

7. A method according to any one of the preceding claims, wherein the dehulled fava bean flour comprises at most 10 wt-% of hulls.

8. A method according to any one of the preceding claims, wherein particle size of the dehulled fava bean flour is below 1000 µm.

9. A method according to any one of the preceding claims, wherein the food product further comprises at most 15 wt-% of at least one component selected from a group consisting of spices, herbs, colours, extracts, vitamins and flavours.

10. A method according to any one of the preceding claims, wherein the food product at the exit of the cooling die has a thickness of 2-30 mm.

11. A method according to one any of the preceding claims, wherein the temperature of the food product at the exit of the cooling die is 60-85 °C.

12. A method according to any one of the preceding claims, wherein the mixing of dehulled fava bean flour and vegetable protein flour and the adding of water to the basic mixture is carried out in the extruder.

13. A method according to any one of the preceding claims, further comprising allowing the food product to cool to ambient temperature and vacuum packing the food product.

14. A method according to claim 13, further comprising sterilising the vacuum-packed food product by subjecting it to a temperature above 105 °C for a period of time of at least 3 minutes.

## Patentansprüche

1. Verfahren zum Herstellen eines Lebensmittels, umfassend
- Mischen von Mehl aus geschälten Favabohnen und Pflanzenproteinmehl, um eine Basismischung zu erhalten, wobei die Basismischung zu 15-30 Gew.-% Mehl aus geschälten Favabohnen und zu 70-85 Gew.-% Pflanzenproteinmehl umfasst;
- Hinzufügen von Wasser zu der Basismischung in einer Menge von 30-70 Gew.-% des Gesamtgewichts der Basismischung und Wasser, um eine hydratisierte Mischung zu erhalten;
- Kneten der hydratisierten Mischung bei einer Temperatur von 100-150 °C in einem Extruder, um einen Teig zu bilden; und
- Zulassen, dass der Teig aus dem Extruder über eine Kühldüse austritt, um das Lebensmittelprodukt zu bilden, wobei die Temperatur des Lebensmittelprodukts am Ausgang des Kühlwerkzeugs 50-95 °C beträgt.

2. Verfahren nach Anspruch 1, wobei das Pflanzenprotein aus einer Gruppe ausgewählt ist, die aus Hülsenfruchtproteinen, Nussproteinen, Getreideproteinen, Samenproteinen und Kartoffelprotein besteht.

3. Verfahren nach einem der vorstehenden Ansprüche, wobei der Proteingehalt des Mehls aus geschälten Favabohnen 25-45 g/100 g beträgt.

4. Verfahren nach einem der vorstehenden Ansprüche, wobei die Basismischung zu 20-30 Gew.-% Mehl aus geschälten Favabohnen umfasst.

5. Verfahren nach einem der vorstehenden Ansprüche, wobei die Basismischung zu 70-80 Gew -% Pflanzenproteinmehl umfasst.

6. Verfahren nach einem der vorstehenden Ansprüche, wobei die Menge an Wasser in der hydratisierten Mischung 45-60 Gew.-% beträgt.

7. Verfahren nach einem der vorstehenden Ansprüche, wobei das Mehl aus geschälten Favabohnen zu höchstens 10 Gew.-% Schalen umfasst.

8. Verfahren nach einem der vorstehenden Ansprüche, wobei die Teilchengröße des Mehls aus geschälten Favabohnen unter 1000 µm liegt.

9. Verfahren nach einem der vorstehenden Ansprüche, wobei das Lebensmittelprodukt ferner zu höchstens 15 Gew.-% mindestens eine Komponente umfasst, die ausgewählt ist aus einer Gruppe bestehend aus Gewürzen, Kräutern, Farben, Extrakten, Vitaminen und Aromen.

10. Verfahren nach einem der vorstehenden Ansprüche, wobei das Lebensmittelprodukt am Ausgang des Kühlwerkzeugs eine Dicke von 2-30 mm aufweist.

11. Verfahren nach einem der vorstehenden Ansprüche, wobei die Temperatur des Lebensmittelprodukts am Ausgang des Kühlwerkzeugs 60-85 °C beträgt.

12. Verfahren nach einem der vorstehenden Ansprüche, wobei das Mischen von Mehl aus geschälten Favabohnen und Pflanzenproteinmehl und das Hinzufügen von Wasser zu der Basismischung in dem Extruder erfolgt.

13. Verfahren nach einem der vorstehenden Ansprüche, ferner umfassend ein Abkühlenlassen des Lebensmittelprodukts auf Umgebungstemperatur und ein Vakuumverpacken des Lebensmittelprodukts.

14. Verfahren nach Anspruch 13, ferner umfassend ein Sterilisieren des vakuumverpackten Lebensmittelprodukts, indem es einer Temperatur von mehr als 105 °C für einen Zeitraum von mindestens 3 Minuten unterzogen wird.

## Revendications

1. Procédé de fabrication d'un produit alimentaire, comprenant :
- le mélange de farine de fève décortiquée et de farine riche en protéines végétales pour obtenir un mélange de base, ledit mélange de base comprenant 15 à 30 % en poids de farine de fève décortiquée et 70 à 85 % en poids de farine riche en protéines végétales ;
- l'ajout d'eau au mélange de base en une quantité de 30 à 70 % en poids par rapport au poids total du mélange de base et de l'eau, pour obtenir un mélange hydraté ;
- le pétrissage du mélange hydraté à une température de 100 à 150 °C dans une extrudeuse, pour former une pâte ; et
- la sortie de la pâte hors de l'extrudeuse, par une filière de refroidissement, pour former le produit alimentaire, la température du produit alimentaire à la sortie de la filière de refroidissement allant de 50 à 95 °C.

2. Procédé selon la revendication 1, dans lequel la protéine végétale est issue du groupe constitué des protéines de légumineuses, des protéines de fruits à coque, des protéines de céréales, des protéines de graines et des protéines de pomme de terre.

3. Procédé selon l'une quelconque des revendications précédentes, dans lequel la teneur en protéines de la farine de fève décortiquée va de 25 à 45 g pour 100 g.

4. Procédé selon l'une quelconque des revendications précédentes, dans lequel le mélange de base comprend 20 à 30 % en poids de farine de fève décortiquée.

5. Procédé selon l'une quelconque des revendications précédentes, dans lequel le mélange de base comprend 70 à 80 % en poids de farine riche en protéines végétales.

6. Procédé selon l'une quelconque des revendications précédentes, dans lequel la quantité d'eau du mélange hydraté va de 45 à 60 % en poids.

7. Procédé selon l'une quelconque des revendications précédentes, dans lequel la farine de fève décortiquée comprend au maximum 10 % en poids de peaux de fève.

8. Procédé selon l'une quelconque des revendications précédentes, dans lequel la granulométrie de la farine de fève décortiquée est inférieure à 1000 µm.

9. Procédé selon l'une quelconque des revendications précédentes, dans lequel le produit alimentaire comprend en outre au maximum 15 % en poids d'au moins un composant issu du groupe constitué des épices, aromates, colorants, extraits, vitamines et arômes.

10. Procédé selon l'une quelconque des revendications précédentes, dans lequel le produit alimentaire à la sortie de la filière de refroidissement présente une épaisseur de 2 à 30 mm.

11. Procédé selon l'une quelconque des revendications précédentes, dans lequel la température du produit alimentaire à la sortie de la filière de refroidissement va de 60 à 85 °C.

12. Procédé selon l'une quelconque des revendications précédentes, dans lequel l'opération de mélange de la farine de fève décortiquée et de la farine riche en protéines végétales ainsi que l'ajout d'eau au mélange de base s'effectuent dans l'extrudeuse.

13. Procédé selon l'une quelconque des revendications précédentes, comprenant en outre le refroidissement du produit alimentaire à température ambiante et l'emballage sous vide du produit alimentaire.

14. Procédé selon la revendication 13, comprenant en outre la stérilisation du produit alimentaire emballé sous vide sous l'effet d'une température supérieure à 105 °C appliquée pendant au moins 3 minutes.
